(19) Europäisches Patentamt
European Patent Office
Office européen des brevets

(11) EP 4 000 923 A1

(12) EUROPEAN PATENT APPLICATION
published in accordance with Art. 153(4) EPC

(43) Date of publication:
25.05.2022 Bulletin 2022/21

(21) Application number: 20866137.1

(22) Date of filing: 03.09.2020

(51) International Patent Classification (IPC):
B32B 27/00 (2006.01)     B32B 27/12 (2006.01)
B32B 27/40 (2006.01)     C09J 175/06 (2006.01)
C08G 18/42 (2006.01)     C09J 7/35 (2018.01)

(52) Cooperative Patent Classification (CPC):
B32B 27/00; B32B 27/12; B32B 27/40;
C08G 18/42; C09J 7/35; C09J 175/06

(86) International application number:
PCT/JP2020/033357

(87) International publication number:
WO 2021/054130 (25.03.2021 Gazette 2021/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.09.2019 JP 2019171613

(71) Applicant: DIC Corporation
Tokyo 174-8520 (JP)

(72) Inventors:
• KOMATSUZAKI, Kunihiko
  Takaishi-shi, Osaka 592-0001 (JP)
• KANAGAWA, Yoshinori
  Takaishi-shi, Osaka 592-0001 (JP)

(74) Representative: Beckmann, Claus
Kraus & Weisert
Patentanwälte PartGmbB
Thomas-Wimmer-Ring 15
80539 München (DE)

(54) **MOISTURE-PERMEABLE WATERPROOF FABRIC**

(57) [Problem] An object of the invention is to provide a moisture-permeable waterproof fabric which uses a biomass raw material, has excellent adhesiveness to a cloth (particularly, a water-repellent cloth), and further has excellent moisture permeability and film strength.

[Means for Resolution] A moisture-permeable waterproof fabric includes: a cloth (i), an adhesive layer (ii), and a surface skin layer (iii). The adhesive layer (ii) is formed from a moisture-curable polyurethane hot melt resin composition that contains a urethane prepolymer (C) having an isocyanate group, and the urethane prepolymer (C) is a reaction product of a polyisocyanate (B) and a polyol (A) containing a biomass-derived polyester polyol (a1).

The surface skin layer (iii) is formed from a urethane resin composition that contains a urethane resin (R) containing a polyol (P) and a polyisocyanate (Q) as essential raw materials thereof, and the polyol (P) contains a polyol (P1) having an oxyethylene group and a specific polyester polyol (P2).

EP 4 000 923 A1

**Description**

TECHNICAL FIELD

The present invention relates to a moisture-permeable waterproof fabric.

BACKGROUND ART

A moisture-permeable waterproof clothing material having both moisture permeability and waterproofness is a structure in which a moisture-permeable film is bonded to a cloth by an adhesive, and as the adhesive, a urethane-based adhesive is generally used from the viewpoint of good adhesion to both the moisture-permeable film and the cloth. Further, among the urethane-based adhesives, the use amount of a solvent-free moisture curable polyurethane resin composition is gradually increasing due to recent global solvent discharge regulation and residual solvent regulation (see, for example, PTL 1).

On the one hand, it has been pointed out a problem that the used cloth has finer denier and improved water repellency due to high functionality, and adhesiveness with the adhesive deteriorates accordingly. At present, no moisture-curable polyurethane resin composition that exhibits high adhesiveness to a super water repellent cloth is found.

On the other hand, a urethane resin is generally used as the moisture-permeable film from the viewpoint of stretchability and processing suitability. As the moisture-permeable film, for example, a wet film-forming film of a urethane resin, a non-porous film of hydrophilic urethane resin, and the like have been used (for example, see PTL 2).

In addition, as is focused on recent marine plastic problems, a degree of attention to a sustainable product aimed at being independent of petroleum resources is increasing, and such a need is also increasing in the urethane resin or moisture-curable polyurethane hot melt resin composition based on a petroleum raw material.

Although various studies have been conducted on biomass urethane resin for the moisture-permeable film, the moisture permeability is still low and the resin is not at a practical level.

CITATION LIST

PATENT LITERATURE

PTL 1: JP-A-2017-202608
PTL 2: JP-A-2018-65940

SUMMARY OF INVENTION

TECHNICAL PROBLEM

An object of the invention is to provide a moisture-permeable waterproof fabric which uses a biomass raw material, has excellent adhesiveness to a cloth (particularly, a water-repellent cloth), and further has excellent moisture permeability and film strength.

SOLUTION TO PROBLEM

The invention provides a moisture-permeable waterproof fabric including: a cloth (i); an adhesive layer (ii); and a surface skin layer (iii). The adhesive layer (ii) is formed from a moisture-curable polyurethane hot melt resin composition that contains a urethane prepolymer (C) having an isocyanate group, and the urethane prepolymer (C) is a reaction product of a polyisocyanate (B) and a polyol (A) containing a polyester polyol (a1) containing, as raw materials thereof, a biomass-derived polybasic acid (x) and a biomass-derived glycol (y). The surface skin layer (iii) is formed from a urethane resin composition that contains a urethane resin (R) containing a polyol (P) and a polyisocyanate (Q) as essential raw materials thereof, and the polyol (P) contains a polyol (P1) having an oxyethylene group and a polyester polyol (P2) containing, as raw materials thereof, a biomass-derived glycol (z) and a crystalline polybasic acid (w).

ADVANTAGEOUS EFFECTS OF INVENTION

The moisture-permeable waterproof fabric of the invention uses a biomass raw material for both the adhesive layer (ii) and the surface skin layer (iii), and is an environment-friendly material. Further, the moisture-permeable waterproof fabric of the invention is excellent in adhesiveness to various clothes, and also has excellent adhesiveness to the water-repellent cloth. Further, the moisture-permeable waterproof fabric of the invention is also excellent in the moisture permeability and the film strength.

DESCRIPTION OF EMBODIMENTS

A moisture-permeable waterproof fabric of the invention includes a specific adhesive layer (ii) and a surface skin layer (iii) on a cloth (i).

As the cloth (i), for example, a fiber base material such as a non-woven fabric, a woven fabric, knitting made of polyester fiber, polyethylene fiber, nylon fiber, acrylic fiber, polyurethane fiber, acetate fiber, rayon fiber, polylactic acid fiber, cotton, linen, silk, wool, glass fiber, carbon fiber, or blended fiber thereof; the non-woven fabric impregnated with a resin such as polyurethane resin; the non-woven fabric further provided with a porous layer; and a resin base material can be used.

Further, in the invention, the cloth (i) exhibits excellent adhesiveness even when the cloth (i) is the material subjected to a water repellent treatment (hereinafter, abbreviated as "water-repellent cloth"). In the invention, "water repellency" of the water-repellent cloth means that surface free energy obtained by the following calculation is 50 mJ/m$^2$ or less.

A contact angle of a measurement liquid (water and diiodomethane) on the cloth (i) was measured using a contact angle meter ("DM500" manufactured by Kyowa Interface Science Co., Ltd.). Based on this result, the surface free energy of the cloth (i) was calculated using the following formula (1).

$$(1 + \cos A) \cdot \gamma L/2 = (\gamma sd \cdot \gamma Ld)1/2 + (\gamma sp \cdot \gamma Lp)1/2$$

A is the contact angle of the measurement liquid on the cloth (i)
$\gamma L$ is surface tension of the measurement liquid
yLd is a dispersive force component of the surface free energy of the measurement liquid
$\gamma Lp$ is a polar force component of the surface free energy of the measurement liquid
ysd is a dispersive force component of the surface free energy of the cloth (i)
ysp is a polar force component of the surface free energy of the cloth (i)

Next, the adhesive layer (ii) will be described.

The adhesive layer (ii) is formed from a moisture-curable polyurethane hot melt resin composition that contains a urethane prepolymer (C) having an isocyanate group, and the urethane prepolymer (C) is a reaction product of a polyisocyanate (B) and a polyol (A) containing a specific polyester polyol. By using the adhesive layer (ii), the moisture-permeable waterproof fabric having excellent adhesiveness to the cloth (particularly, water-repellent cloth) can be obtained.

It is essential that the polyol (A) contains a polyester polyol (a1) containing a biomass-derived polybasic acid (x) and a biomass-derived glycol (y) as raw materials.

As the biomass-derived polybasic acid (x), sebacic acid, succinic acid, dimer acid, 2,5-furandicarboxylic acid, or the like can be used. These compounds may be used alone or in combination of two or more thereof.

As the sebacic acid, for example, those obtained by a known cleavage reaction of a vegetable oil such as castor oil with a caustic alkali can be used. As the succinic acid, for example, those obtained by fermenting corn, sugarcane, cassava, sago palm, or the like by a known method can be used. As the dimer acid, for example, those obtained by dimerization of an unsaturated fatty acid of a plant-derived natural fat fatty acid by a known method can be used. As the 2,5-furandicarboxylic acid, for example, those using fructose as a raw material, and those obtained by a known method using furfural carboxylic acid, which is a furfural derivative, and carbon dioxide can be used.

Among those described above, as the biomass-derived polybasic acid (x), sebacic acid and/or succinic acid are preferable, and sebacic acid is more preferable, from the viewpoint of obtaining more excellent adhesiveness to the cloth.

As the biomass-derived glycol (y), for example, ethylene glycol, 1,2-propanediol, 1,3-propanediol, 1,4-butanediol, 1,10-decanediol, dimer diol, and isosorbide can be used. These compounds may be used alone or in combination of two or more thereof.

As the ethylene glycol, for example, those obtained from bioethanol obtained by a known method through ethylene can be used. As the 1,2-propanediol, for example, those obtained by fermentation of saccharides, and those obtained by high-temperature hydrogenation of glycerin produced as a by-product of biodiesel by a known method can be used. As the 1,3-propanediol, for example, those obtained by producing 3-hydroxypropionaldehyde from glycerol, glucose, and other saccharides by a known fermentation method, and then further converting to the 1,3-propanediol, and those directly obtained from glucose and other saccharides by a fermentation method can be used.

As the 1,4-butanediol, for example, those obtained from glucose by a known fermentation method, those obtained from 1,3-butadiene obtained by a fermentation method, and those obtained by hydrogenating succinic acid with a reduction catalyst can be used. As the 1,10-decanediol, for example, those obtained by hydrogenating sebacic acid directly or after an esterification reaction can be used. As the dimer diol, for example, those obtained by reducing a dimer acid by a known method can be used. As the isosorbide, for example, those obtained by dehydration condensation of sorbitol obtained from starch by a known method can be used.

Among those described above, as the biomass-derived glycol (y), 1,3-propanediol and/or 1,4-butanediol are preferable, and 1,3-propanediol is more preferable, from the viewpoint of obtaining even more excellent adhesiveness to the cloth.

The polyester polyol (a1) contains the biomass-derived polybasic acid (x) and the biomass-derived glycol (y) as essential raw materials, and other polybasic acids and/or glycols may be used in combination in the range where an effect of the invention is not impaired.

The number average molecular weight of the polyester polyol (a1) is preferably in the range of 500 to 100,000, more preferably in the range of 700 to 50,000, and still more preferably in the range of 800 to 10,000, from the viewpoint of obtaining more excellent mechanical strength and adhesiveness to the cloth. The number average molecular weight of the polyester polyol (a1) is a value measured by a gel permeation chromatography (GPC) method.

The polyol (A) contains the polyester polyol (a1) as an essential raw material, but may contain other polyols as necessary. The content of the polyester polyol (a1) in the polyol (A) is preferably 20% by mass or more, more preferably 50% by mass or more, and still more preferably 70% by mass or more.

As the other polyols, for example, a polyester polyol, a polycarbonate polyol, a polyether polyol, a polybutadiene polyol, and a polyacryl polyol other than the polyester polyol (a1) can be used. These polyols may be used alone or in combination of two or more thereof.

The number average molecular weight of the other polyols is, for example, in the range of 500 to 100,000. The number average molecular weight of the other polyols is a value measured by the gel permeation chromatography (GPC) method.

As the polyisocyanate (B), for example, aromatic polyisocyanates such as polymethylene polyphenyl polyisocyanate, diphenylmethane diisocyanate, carbodiimide-modified diphenylmethane diisocyanate, xylylene diisocyanate, phenylene diisocyanate, tolylene diisocyanate, and naphthalene diisocyanate; and aliphatic or alicyclic polyisocyanates such as hexamethylene diisocyanate, cyclohexane diisocyanate, isophorone diisocyanate, dicyclohexylmethane diisocyanate, and tetramethylxylylene diisocyanate can be used. Further, as these polyisocyanates (B), those derived from petroleum resources and those derived from biomass can be both used. These polyisocyanates may be used alone or in combination of two or more thereof. Among these, the aromatic polyisocyanates are preferably used, and the diphenylmethane diisocyanate is more preferable, from the viewpoint of obtaining more excellent reactivity and adhesiveness to the cloth.

The use amount of the polyisocyanate (B) is preferably in the range of 5% by mass to 40% by mass, and more preferably in the range of 10% by mass to 30% by mass, based on the total mass of the raw materials constituting the urethane prepolymer (C).

The hot melt urethane prepolymer (C) is obtained by reacting the polyol (A) with the polyisocyanate (B), and has an isocyanate group that can react with moisture present in air or in a substrate, to which the moisture-curable polyurethane hot melt resin composition is applied, to form a crosslinked structure.

As a method of producing the hot melt urethane prepolymer (C), for example, the hot melt urethane prepolymer (C) can be produced by charging the polyisocyanate (B) into a reaction vessel containing the polyol (A), and reacting an isocyanate group of the polyisocyanate (B) with a hydroxyl group of the polyol (A) under conditions where the isocyanate group is excessive with respect to the hydroxyl group.

The equivalent ratio (isocyanate group/hydroxyl group) of the isocyanate group of the polyisocyanate (B) to the hydroxyl group of the polyol (A) in producing the hot melt urethane prepolymer (C) is preferably in the range of 1.1 to 5, and more preferably in the range of 1.5 to 3, from the viewpoint of obtaining more excellent adhesiveness.

The isocyanate group content (hereinafter, abbreviated as "NCO%") in the hot melt urethane prepolymer (C) obtained by the above method is preferably in the range of 1.7 to 5, and more preferably in the range of 1.8 to 3, from the viewpoint of obtaining more excellent adhesiveness. The NCO% in the above hot melt urethane prepolymer (i) is a value measured by a potentiometric titration method in accordance with JIS SK1603-1:2007.

The moisture-curable polyurethane hot melt resin composition used in the adhesive layer (ii) of the invention contains the urethane prepolymer (C) as an essential component, and may contain other additives as necessary.

As the other additives, for example, a light-resistant stabilizer, a curing catalyst, a tackifier, a plasticizer, a stabilizer, a filler, a dye, a pigment, a fluorescent whitening agent, a silane coupling agent, a wax, and a thermoplastic resin can be used. These additives may be used alone or in combination of two or more thereof.

The biomass degree of the adhesive layer (ii) of the invention is preferably 40% or more, and more preferably 70% or more. The biomass degree of the adhesive layer (ii) indicates a ratio of the total weight of the biomass-derived raw materials used in producing the moisture-curable polyurethane hot melt resin composition to the total weight of the moisture-curable polyurethane hot melt resin composition used in the adhesive layer (ii).

Next, the surface skin layer (iii) will be described.

The surface skin layer (iii) is formed from a urethane resin composition that contains a urethane resin (R) containing a polyol (P) and a polyisocyanate (Q) as essential raw materials thereof, and the polyol (P) contains a polyol (P1) having an oxyethylene group and a polyester polyol (P2) containing, as raw materials thereof, a biomass-derived glycol (z) and a crystalline polybasic acid (w). By using the surface skin layer (iii), it is possible to obtain high levels of moisture permeability and film strength, which are contradictory performances.

The polyol (P1) having the oxyethylene group is an indispensable material for obtaining excellent moisture permeability. As the polyol (P1), for example, a polyoxyethylene polyol, a polyoxyethylene polyoxypropylene polyol, and a polyoxyethylene polyoxy tetramethylene polyol can be used. These polyols may be used alone or in combination of two or more thereof. Among these, the polyoxyethylene polyol is preferably used from the viewpoint that the excellent moisture permeability can be obtained.

The number average molecular weight of the polyol (P1) is preferably in the range of 800 to 50,000, and more preferably in the range of 1,000 to 20,000, from the viewpoint of obtaining more excellent moisture permeability and film strength. The number average molecular weight of the polyol (P1) is a value measured by the gel permeation chromatography (GPC) method.

As the polyol (P1), those produced from biomass raw materials can also be used, but at present, those expensive and used in practice are extremely limited. Therefore, at present, raw materials other than the polyol (a1) is preferred in increasing the biomass degree.

Therefore, in the invention, as the polyol (P), in addition to the polyol (P1), the polyester polyol (P2) containing the biomass-derived glycol (z) and the crystalline polybasic acid (w) as the raw materials is further used, and thereby the biomass degree can be improved and the excellent film strength can also be obtained.

As the biomass-derived glycol (z), those the same as those used as the biomass-derived glycol (y) can be used. These glycols may be used alone or in combination of two or more thereof. Among these, the 1,3-propanediol and/or the 1,4-butanediol is preferable, and the 1,3-propanediol is more preferable from the viewpoint of obtaining more excellent film strength.

As the crystalline polybasic acid (w), for example, sebacic acid, succinic acid, 1,10-decanedicarboxylic acid, and 1,12-dodecanedicarboxylic acid can be used. As these polybasic acids, those derived from the petroleum resources and those derived from the biomass can be both used. These compounds may be used alone or in combination of two or more thereof. Among these, the biomass-derived crystalline polybasic acid is preferably used from the viewpoint that the biomass degree can be improved. In the invention, "crystallinity" means that a peak of heat of crystallization or heat of fusion can be found in a differential scanning calorimetry (DSC) measurement based on JISK7121:2012, and "noncrystalline" means that the peak cannot be found.

As the biomass-derived sebacic acid, for example, those obtained by a known cleavage reaction of a vegetable oil such as castor oil with a caustic alkali can be used. As the biomass-derived succinic acid, for example, those obtained by fermenting corn, sugarcane, cassava, sago palm, or the like by a known method can be used. As the biomass-derived 1,10-decanedicarboxylic acid, for example, those obtained by fermenting lauryl acid by a known method can be used. As the biomass-derived 1,12-dodecane diacid, for example, those obtained by fermenting myristic acid by a known method can be used.

Among those described above, as the crystalline polybasic acids (w), a compound selected from a group consisting of the biomass-derived sebacic acid, succinic acid, 1,10-decanedicarboxylic acid, and 1,12-dodecanedicarboxylic acid is preferable, the biomass-derived sebacic acid and/or succinic acid are more preferable, and the biomass-derived sebacic acid is still more preferable, from the viewpoint of obtaining more excellent film strength.

The number average molecular weight of the polyester polyol (P2) is preferably in the range of 500 to 100,000, more preferably in the range of 700 to 50,000, and still more preferably in the range of 800 to 10,000, from the viewpoint of obtaining more excellent film strength. The number average molecular weight of the polyester polyol (a2) is a value measured by the gel permeation chromatography (GPC) method.

In addition to the above (P1) and (P2), a chain extender (P3) having a molecular weight in the range of 40 to 500 is preferably used as the polyol (P) from the viewpoint of obtaining more excellent film strength. The molecular weight of the chain extender (P3) is a value calculated from a chemical structural formula thereof.

As the chain extender (P3), for example, a chain extender having a hydroxyl group such as ethylene glycol, diethylene glycol, triethylene glycol, propylene glycol, 1,3-propanediol, 1,3-butanediol, 1,4-butanediol, hexamethylene glycol, trimethylolpropane, and glycerin; and a chain extender having an amino group such as ethylenediamine, 1,2-propanediamine, 1,6-hexamethylenediamine, piperazine, 2-methylpiperazine, 2,5-dimethylpiperazine, isophoronediamine, 4,4'-dicyclohexylmethanediamine, 3,3'-dimethyl-4,4'-dicyclohexylmethanediamine, 1,2-cyclohexanediamine, 1,4-cyclohexanediamine, aminoethylethanolamine, hydrazine, diethylenetriamine, and triethylenetetramine can be used. Further, as these chain extenders (P3), those derived from the petroleum resources and those derived from the biomass can be both used. These chain extenders may be used alone or in combination of two or more thereof.

As the polyol (P), in addition to the above (P1), (P2), and (P3), other polyols may be used in combination in the range where the effect of the invention is not impaired.

As the other polyols, a petroleum-derived polyester polyol, a polyether polyol, a polycarbonate polyol, a polyacryl polyol, a polybutadiene polyol, or the like other than the above (P1) can be used. These polyols may be used alone or in combination of two or more thereof.

The hydroxyl equivalent of the polyol (P) is preferably in the range of 400 g/eq. to 600 g/eq., from the viewpoint of obtaining more excellent moisture permeability and film strength while increasing the biomass degree. The hydroxyl equivalent means the molecular weight per hydroxyl group, a relevant range is a range in which the content of the polyol (P) is relatively high among the raw materials constituting the urethane resin (R), and shows that there are relatively few hard segments in the urethane resin (R). When the hydroxyl equivalent of the polyol (P) is within the relevant range, more excellent moisture permeability and film strength can be both obtained.

The use amount of the polyol (P1) having the oxyethylene group is preferably in the range of 10% by mass to 30% by mass, and more preferably in the range of 10% by mass to 20% by mass in the total amount of the raw materials constituting the urethane resin (R).

The use amount of the polyester polyol (P2) is preferably in the range of 40% by mass to 70% by mass, and more preferably in the range of 50% by mass to 60% by mass in the total amount of the raw materials constituting the urethane resin (R).

The use amount of the chain extender (P3) when the chain extender (P3) is used is preferably in the range of 2% by mass to 6% by mass, more preferably in the range of 2% by mass to 4% by mass, in the total amount of the raw materials constituting the urethane resin (R).

As the polyisocyanate (Q), those the same as those used as the polyisocyanate (B) can be used. These polyisocyanates may be used alone or in combination of two or more thereof. Among these, the aromatic polyisocyanates are preferably used, and the diphenylmethane diisocyanate is more preferable, from the viewpoint of obtaining more excellent film strength and moisture permeability.

The use amount of the polyisocyanate (Q) is preferably in the range of 15% by mass to 25% by mass, and more preferably in the range of 17% by mass to 23% by mass in the total amount of the raw materials constituting the urethane resin (R).

An example of a method of producing the urethane resin (R) includes a method in which the polyol (P) and the polyisocyanate (Q) are collectively charged and reacted with each other. The reaction is preferably carried out, for example, at a temperature of 30°C to 100°C for 3 hours to 10 hours. The reaction may be carried out in a solvent to be described later.

The molar ratio of the hydroxyl group of the polyol (P) to an isocyanate group of the polyisocyanate (Q) [(isocyanate group)/(hydroxyl group and amino group)] is preferably in the range of 0.6 to 2, and more preferably in the range of 0.8 to 1.2.

The weight average molecular weight of the urethane resin (R) is preferably in the range of 10,000 to 1,000,000, more preferably in the range of 30,000 to 500,000, and still more preferably in the range of 50,000 to 100,000, from the viewpoint of obtaining more excellent film strength. The weight average molecular weight of the urethane resin (R) is a value measured by the gel permeation chromatography (GPC) method.

The biomass degree of the surface skin layer (iii) is preferably 40% or more, more preferably in the range of 50% to 60%, from the viewpoint of achieving both excellent moisture permeability and film strength. The biomass degree of the surface skin layer (iii) indicates a ratio of the total weight of the biomass-derived raw materials used in producing the urethane resin (R) to the total weight of the urethane resin (R).

The urethane resin composition used for the surface skin layer (iii) contains the urethane resin (R) as the essential component, and may contain other components as necessary.

As the other components, for example, a solvent, a pigment, a flame retardant, a plasticizer, a softening agent, a stabilizer, a wax, an antifoaming agent, a dispersant, a penetrant, a surfactant, a filler, an antifungal agent, an antibacterial agent, an ultraviolet absorber, an antioxidant, a weathering stabilizer, a fluorescent brightener, an antiaging agent, and a thickener can be used. These components may be used alone or in combination of two or more thereof.

As the solvent, for example, ketone solvents such as water, N, N-dimethylformamide, N, N-dimethylacetamide, N-methyl-2-pyrrolidone, methyl ethyl ketone, methyl-n-propyl ketone, acetone, and methyl isobutyl ketone; ester solvents such as methyl formate, ethyl formate, propyl formate, methyl acetate, ethyl acetate, propyl acetate, isopropyl acetate, butyl acetate, isobutyl acetate and secondary butyl acetate; and alcohol solvents such as methanol, ethanol, isopropyl alcohol and butanol can be used. These solvents may be used alone or in combination of two or more thereof.

The content of the solvent is preferably in the range of 10% by mass to 90% by mass, and more preferably in the range of 50% by mass to 80% by mass in the urethane resin composition, from the viewpoint of workability, viscosity, and film strength.

Next, a method of producing the moisture-permeable waterproof fabric of the invention will be described.

Example of the method of producing the moisture-permeable waterproof fabric include a method in which on a substrate such as a release paper, the surface skin layer (iii) is formed from the urethane resin composition, then the moisture-curable polyurethane hot melt resin composition is applied onto the surface skin layer (iii), and the surface skin layer (iii) is bonded to the cloth (i), and a method in which the moisture-curable polyurethane hot melt resin composition is directly applied onto the cloth (i) and the surface skin layer (iii) is bonded to the cloth (i).

Examples of a method of applying the urethane resin composition include a gravure coater method, a knife coater method, a pipe coater method, and a comma coater method.

As a method of applying the moisture-curable polyurethane hot melt resin composition, a method of intermittently applying the moisture-curable polyurethane hot melt resin composition using a gravure roll coater, a dispenser, or the like is preferable.

The urethane resin composition and the moisture-curable polyurethane hot melt resin composition can be dried and cured by a known method after coating to form the adhesive layer (ii) and the surface skin layer (iii), respectively.

The thickness of the adhesive layer (ii) is in the range of, for example, 5 $\mu$m to 50 $\mu$m. The thickness of the surface skin layer (iii) is in the range of, for example, 0.01 mm to 10 mm.

As described above, the moisture-permeable waterproof fabric of the invention uses the biomass raw materials for both the adhesive layer (ii) and the surface skin layer (iii), and is an environment-friendly material. The moisture-permeable waterproof fabric of the invention is excellent in adhesiveness to various clothes, and also has excellent adhesiveness to the water-repellent cloth. The moisture-permeable waterproof fabric of the invention is also excellent in moisture permeability and the film strength.

[Examples]

Hereinafter, the invention will be described in more detail with reference to Examples.

[Synthesis Example 1] Preparation of Moisture-curable Polyurethane Hot Melt Resin Composition (C-1) for Adhesive Layer

To a four-necked flask equipped with a thermometer, a stirrer, an inert gas inlet and a reflux cooler, 80 parts by mass of a biomass polyester polyol (reaction product of sebacic acid ("sebacic acid" manufactured by Toyokuni Oil Co., Ltd., hereinafter abbreviated as "Bio SEBA") and 1,3-propanediol ("SUSTERRA propanediol" manufactured by DuPont, hereinafter abbreviated as "Bio PD"), the number average molecular weight: 2,000, hereinafter abbreviated as "Bio PEs (1)") was charged, dried under a reduced pressure at 110°C, and dehydrated until the water content was 0.05% by mass or less. Then, after cooling to 60°C, 20 parts by mass of diphenylmethane diisocyanate (hereinafter abbreviated as "MDI") was added, the temperature was raised to 110°C, and a mixture was reacted for 2 hours until the isocyanate group content is constant, thereby obtaining a moisture-curable polyurethane hot melt resin composition (C-1) for the adhesive layer.

[Synthesis Example 2] Preparation of Moisture-curable Polyurethane Hot Melt Resin Composition (C-2) for Adhesive Layer

A moisture-curable polyurethane hot melt resin composition (C-2) for the adhesive layer was obtained in the same manner as in Example 1 except that a biomass polyester polyol (reaction product of Bio SEBA and 1,4-butanediol ("Bio-BDO" manufactured by Jenomatica, hereinafter "Bio BD"), the number average molecular weight: 2,000, hereinafter abbreviated as "Bio PEs (2)") was used instead of the Bio PEs (1).

[Synthesis Example 3] Preparation of Moisture-curable Polyurethane Hot Melt Resin Composition (C-3) for Adhesive Layer

A moisture-curable polyurethane hot melt resin composition (C-3) for the adhesive layer was obtained in the same manner as in Example 1 except that a biomass polyester polyol (reaction product of succinic acid ("succinic acid" manufactured by SUCCINITY, hereinafter abbreviated as "biosuccinic acid") and Bio PD), the number average molecular weight: 2,000, hereinafter abbreviated as "Bio PEs (3)") was used instead of the Bio PEs (1).

[Comparative Synthesis Example 1] Preparation of Moisture-curable Polyurethane Hot Melt Resin Composition (CR-1) for Adhesive Layer

To a four-necked flask equipped with a thermometer, a stirrer, an inert gas inlet and a reflux cooler, 15 parts by mass of a polyester polyol (reaction product of phthalic anhydride and 1,6-hexanediol (the above are petroleum-based components), the number average molecular weight: 2,000, hereinafter abbreviated as "RPEs (1)") and a polyester polyol (reaction product of phthalic anhydride, terephthalic acid, adipic acid, ethylene glycol (the above are petroleum-based components), the number average molecular weight: 3,700, hereinafter abbreviated as "RPEs (2)") were charged, dried under a reduced pressure at 110°C, and dehydrated until the water content is 0.05% by mass or less. Next, after cooling to 60°C, 20 parts by mass of MDI was added, the temperature was raised to 110°C, and the mixture was reacted for 2 hours until the isocyanate group content is constant, thereby obtaining a moisture-curable polyurethane hot melt resin composition (CR-1) for the adhesive layer.

[Synthesis Example 4] Preparation of Urethane Resin Composition (R-1) for Surface Skin Layer

To a four-necked flask equipped with a thermometer, a stirrer, an inert gas inlet and a reflux cooler, 120 parts by mass of the Bio PEs (1) and 60 parts by mass of petroleum-based polyethylene glycol (the number average molecular weight: 2,000, hereinafter abbreviated as "PEG (1)") were charged, dried under a reduced pressure at 110°C, and dehydrated until the water content is 0.05% by mass or less. Next, 6 parts by mass of petroleum-based ethylene glycol (hereinafter abbreviated as "EG") and 410 parts by mass of dimethylformamide were added, a temperature was cooled to 60°C, then 47 parts by mass of MDI was added, the temperature was raised to 80°C, after the reaction was performed for 4 hours, 0.5 parts by mass of Bio PD and 130 parts by mass of methyl ethyl ketone were added, the reaction was stopped, and a urethane resin composition (R-1) for the surface skin layer whose viscosity at 25°C is 30,000 mPa·s was obtained.

[Synthesis Example 5] Preparation of Urethane Resin Composition (R-2) for Surface Skin Layer

A urethane resin composition (R-2) for the surface skin layer whose viscosity at 25°C is 30,000 mPa·s was obtained in the same manner as in Example 1 except that the Bio PEs (2) was used instead of the Bio PEs (1).

[Synthesis Example 6] Preparation of Urethane Resin Composition (R-3) for Surface Skin Layer

To a four-necked flask equipped with a thermometer, a stirrer, an inert gas inlet and a reflux cooler, 120 parts by mass of the Bio PEs (1) and 60 parts by mass of petroleum-based polyethylene glycol (the number average molecular weight: 8,000, hereinafter abbreviated as "PEG (2)") were charged, dried under a reduced pressure at 110°C, and dehydrated until the water content is 0.05% by mass or less. Next, 7.5 parts by mass of EG and 410 parts by mass of dimethylformamide were added, the temperature was cooled to 60°C, then 47 parts by mass of MDI was added, the temperature was raised to 80°C, after the reaction was performed for 4 hours, 0.5 parts by mass of Bio PD and 130 parts by mass of methyl ethyl ketone were added, the reaction was stopped, and a urethane resin composition (R-3) for the surface skin layer whose viscosity at 25°C is 30,000 mPa·s was obtained.

[Comparative Synthesis Example 2] Preparation of Urethane Resin Composition (RR-1) for Surface Skin Layer

To a four-necked flask equipped with a thermometer, a stirrer, an inert gas inlet and a reflux cooler, 120 parts by mass of castor oil diol ("PH-5002" manufactured by Itoh Oil Chemicals Co., Ltd., the number average molecular weight: 2,600) and 60 parts by mass of PEG (1) were charged, dried under a reduced pressure at 110°C, and dehydrated until the water content is 0.05% by mass or less. Next, 6.8 parts by mass of EG and 410 parts by mass of dimethylformamide were added, the temperature was cooled to 60°C, then 47 parts by mass of MDI was added, the temperature was raised to 80°C, after the reaction was performed for 4 hours, 0.5 parts by mass of Bio PD and 130 parts by mass of methyl ethyl ketone were added, the reaction was stopped, and a urethane resin composition (RR-1) for the surface skin layer whose viscosity at 25°C is 30,000 mPa·s was obtained.

[Method of Measuring Number Average Molecular Weight and Weight Average Molecular Weight]

The number average molecular weight of the polyol and the weight average molecular weight of the urethane resin (R) used in Examples and Comparative Examples are values measured by the gel permeation chromatography (GPC) method under the following conditions.
Measurement device: high-speed GPC device ("HLC-8220GPC" manufactured by Tosoh Corporation)
Column: the following columns manufactured by Tosoh Corporation were used in the manner of being connected in series.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: differential refractometer (RI)
Column temperature: 40°C
Eluent: Tetrahydrofuran (THF)
Flow rate: 1.0mL/min
Injection amount: 100 μL (tetrahydrofuran solution having a sample concentration of 0.4% by mass)
Standard sample: a calibration curve was created using the following standard polystyrenes.

(Standard Polystyrene)

"TSKgel standard polystyrene A-500" manufactured by Tosoh Corporation
"TSKgel standard polystyrene A-1000" manufactured by Tosoh Corporation
"TSKgel standard polystyrene A-2500" manufactured by Tosoh Corporation
"TSKgel standard polystyrene A-5000" manufactured by Tosoh Corporation
"TSKgel standard polystyrene F-1" manufactured by Tosoh Corporation
"TSKgel standard polystyrene F-2" manufactured by Tosoh Corporation
"TSKgel standard polystyrene F-4" manufactured by Tosoh Corporation
"TSKgel standard polystyrene F-10" manufactured by Tosoh Corporation
"TSKgel standard polystyrene F-20" manufactured by Tosoh Corporation
"TSKgel standard polystyrene F-40" manufactured by Tosoh Corporation
"TSKgel standard polystyrene F-80" manufactured by Tosoh Corporation
"TSKgel standard polystyrene F-128" manufactured by Tosoh Corporation
"TSKgel standard polystyrene F-288" manufactured by Tosoh Corporation
"TSKgel standard polystyrene F-550" manufactured by Tosoh Corporation

[Examples 1 to 9 and Comparative Examples 1 to 3]

Compounding solutions obtained by further diluting the urethane resin compositions for the surface skin layer obtained in Synthetic Examples and Comparative Synthetic Examples with 30 parts by mass of dimethylformamide were applied onto the release papers and dried at 70°C and 120°C respectively to obtain the surface skin layers (iii).

Then, the moisture-curable polyurethane hot melt resin compositions for the adhesive layer obtained in Synthetic Examples and Comparative Synthetic Examples were melted at 100°C, then applied on the surface skin layer (iii) using a gravure roll coater (40L/inch, 130th depth, amount: 10g/m$^2$), bonded to the following three types of clothes, respectively, and laid aside for 2 days in an atmosphere of a temperature of 23°C and a humidity of 50% to obtain the moisture-permeable waterproof fabrics.

Cloth (1): non-water repellent cloth (surface free energy: exceeding 50 mJ/m$^2$)
Cloth (2): water repellent cloth (surface free energy: in the range of 10 mJ/m$^2$ to 50 mJ/m$^2$)
Cloth (3): super water repellent cloth (surface free energy: less than 10 mJ/m$^2$)

[Method of Evaluating Adhesiveness]

The moisture-permeable waterproof fabrics obtained in Examples and Comparative Examples each were cut to a width of 1 inch, and a peel strength (N/inch) of each was measured using "Autograph AG-1" manufactured by Shimadzu Corporation, and those having a peel strength of 5 (N/inch) or more were evaluated as having excellent adhesiveness.

[Method of Evaluating Moisture Permeability]

Compounding solutions obtained by further diluting the urethane resin compositions for the surface skin layer obtained in Synthetic Examples and Comparative Synthetic Examples with 30 parts by mass of dimethylformamide were applied onto release papers and dried at 70°C and 120°C respectively to obtain the surface skin layers (iii). For each of the obtained surface skin layers (iii), the moisture permeability (g/m$^2$/24h) of the moisture-permeable waterproof fabrics obtained in Examples and Comparative Examples was measured according to a B-1 method (potassium acetate method) of JIS L1099:2012, and those having the moisture permeability of 20,000 g/m$^2$/24h or more were evaluated as having excellent moisture permeability.

[Method of Evaluating Film Strength]

Each of the surface skin layers (iii) obtained in the [Method of Evaluating Moisture Permeability] was cut into strips each having a width of 5 mm and a length of 50 mm, pulled using a tensile tester "Autograph AG-I" (manufactured by Shimadzu Corporation) under a condition of a crosshead speed of 10 mm/sec in an atmosphere of a temperature of 23°C, and 100% modulus (MPa) of a test piece was measured. A chuck distance at this time was set to 40 mm. When an obtained 100% modulus value was 2 MPa or more, the film strength was evaluated as excellent.

[Table 1]

| Table 1 | | | Example 1 | Example 2 | Example 3 | Example 4 |
|---|---|---|---|---|---|---|
| Adhesive layer | Type | | (C-1) | (C-1) | (C-1) | (C-2) |
| | Polyester polyol (a) | | Bio PEs (1) | Bio PEs (1) | Bio PEs (1) | Bio PEs (2) |
| | | Polybasic acid (x) | Bio SEBA | Bio SEBA | Bio SEBA | Bio SEBA |
| | | Glycol (y) | 13PD | 13PD | 13PD | 14BD |
| | Other polyols | | | | | |
| | | | | | | |
| | Polyisocyanate (B) | | MDI | MDI | MDI | MDI |
| | Biomass degree (%) | | 80 | 80 | 80 | 80 |
| Surface skin layer | Type | | (R-1) | (R-2) | (R-3) | (R-1) |
| | Polyol (P1) having oxyethylene group | | PEG (1) | PEG (1) | PEG (2) | PEG (1) |
| | Polyester polyol (P2) | Type | Bio PEs (1) | Bio PEs (2) | Bio PEs (1) | Bio PEs (1) |
| | | Glycol (z) | Bio PD | Bio BG | Bio PD | Bio PD |
| | | Crystalline polybasic acid (w) | Bio SEBA | Bio SEBA | Bio SEBA | Bio SEBA |
| | Chain extender (P3) | | EG | EG | EG | EG |
| | | | Bio PD | Bio PD | Bio PD | Bio PD |
| | Hydroxyl equivalent weight (g/eq.) of polyol (P) | | 500 | 500 | 500 | 500 |
| | Polyisocyanate (Q) | | MDI | MDI | MDI | MDI |
| | Biomass degree (%) | | 52 | 52 | 52 | 52 |

(continued)

| Table 1 | | | Example 1 | Example 2 | Example 3 | Example 4 |
|---|---|---|---|---|---|---|
| Evaluation | Evaluation of adhesiveness to cloth (N/inch) | Cloth (1) | 8 | 8 | 8 | 8 |
| | | Cloth (2) | 8 | 8 | 8 | 7 |
| | | Cloth (3) | 8 | 8 | 8 | 6 |
| | Evaluation of moisture permeability | B-1 moisture permeability (g/m$^2$/24h) | 30,000 | 20,000 | 50,000 | 30,000 |
| | Evaluation of film strength | 100%M (MPa) | 4.8 | 5.2 | 4 | 4.8 |

[Table 2]

| Table 2 | | | Example 5 | Example 6 | Example 7 | Example 8 |
|---|---|---|---|---|---|---|
| Adhesive layer | Type | | (C-2) | (C-2) | (C-3) | (C-3) |
| | Polyester polyol (a) | | Bio PEs (2) | Bio PEs (2) | Bio PEs (3) | Bio PEs (3) |
| | | Polybasic acid (x) | Bio SEBA | Bio SEBA | Biosuccinic acid | Biosuccinic acid |
| | | Glycol (y) | 14BD | 14BD | 13PD | 13PD |
| | Other polyols | | | | | |
| | | | | | | |
| | Polyisocyanate (B) | | MDI | MDI | MDI | MDI |
| | Biomass degree (%) | | 80 | 80 | 80 | 80 |
| Surface skin layer | Type | | (R-2) | (R-3) | (R-1) | (R-2) |
| | Polyol (P1) having oxyethylene group | | PEG (1) | PEG (2) | PEG (1) | PEG (1) |
| | Polyester polyol (P2) | Type | Bio PEs (2) | Bio PEs (1) | Bio PEs (1) | Bio PEs (2) |
| | | Glycol (z) | Bio BG | Bio PD | Bio PD | Bio BG |
| | | Crystalline polybasic acid (w) | Bio SEBA | Bio SEBA | Bio SEBA | Bio SEBA |
| | Chain extender (P3) | | EG | EG | EG | EG |
| | | | Bio PD | Bio PD | Bio PD | Bio PD |
| | Hydroxyl equivalent weight (g/eq.) of polyol (P) | | 500 | 500 | 500 | 500 |
| | Polyisocyanate (Q) | | MDI | MDI | MDI | MDI |
| | Biomass degree (%) | | 52 | 52 | 52 | 52 |

(continued)

| Table 2 | | | Example 5 | Example 6 | Example 7 | Example 8 |
|---|---|---|---|---|---|---|
| Evaluation | Evaluation of adhesiveness to cloth (N/inch) | Cloth (1) | 8 | 8 | 8 | 8 |
| | | Cloth (2) | 7 | 7 | 7 | 7 |
| | | Cloth (3) | 5 | 5 | 6 | 6 |
| | Evaluation of moisture permeability | B-1 moisture permeability (g/m²/24h) | 20,000 | 50,000 | 30,000 | 20,000 |
| | Evaluation of film strength | 100%M (MPa) | 5.2 | 4 | 4.8 | 5.2 |

[Table 3]

| Table 3 | | | Example 9 | Comparative Example 1 | Comparative Example 2 | Comparative Example 3 |
|---|---|---|---|---|---|---|
| Adhesive layer | Type | | (C-3) | (C-1) | (CR-1) | (CR-1) |
| | Polyester polyol (a) | | Bio PEs (3) | Bio PEs (1) | | |
| | | Polybasic acid (x) | Biosuccinic acid | Bio SEBA | | |
| | | Glycol (y) | 13PD | 13PD | | |
| | Other polyols | | | | RPEs (1) | RPEs (1) |
| | | | | | RPEs (2) | RPEs (2) |
| | Polyisocyanate (B) | | MDI | MDI | MDI | MDI |
| | Biomass degree (%) | | 80 | 80 | 0 | 0 |
| Surface skin layer | Type | | (R-3) | (RR-1) | (R-1) | (RR-1) |
| | Polyol (P1) having oxyethylene group | | PEG (2) | PEG (1) | PEG (1) | PEG (1) |
| | Polyester polyol (P2) | Type | Bio PEs (1) | Bio PEs (1) | Bio PEs (1) | Bio PEs (1) |
| | | Glycol (z) | Bio PD | Castor oil | Bio PD | Castor oil |
| | | Crystalline polybasic acid (w) | Bio SEBA | diol | Bio SEBA | diol |
| | Chain extender (P3) | | EG | EG | EG | EG |
| | | | Bio PD | Bio PD | Bio PD | Bio PD |
| | Hydroxyl equivalent weight (g/eq.) of polyol (P) | | 500 | 500 | 500 | 500 |
| | Polyisocyanate (Q) | | MDI | MDI | MDI | MDI |
| | Biomass degree (%) | | 52 | 52 | 52 | 52 |

(continued)

| Table 3 | | | Example 9 | Comparative Example 1 | Comparative Example 2 | Comparative Example 3 |
|---|---|---|---|---|---|---|
| Evaluation | Evaluation of adhesiveness to cloth (N/inch) | Cloth (1) | 8 | 8 | 8 | 8 |
| | | Cloth (2) | 7 | 8 | 5 | 5 |
| | | Cloth (3) | 6 | 8 | 1 | 1 |
| | Evaluation of moisture permeability | B-1 moisture permeability (g/m$^2$/24h) | 50,000 | 10,000 | 30,000 | 10,000 |
| | Evaluation of film strength | 100%M (MPa) | 4 | 1.5 | 4.8 | 1.5 |

It was found that the moisture-permeable waterproof fabric of the invention has a high biomass degree and has excellent adhesiveness to cloth, excellent moisture permeability, and excellent film strength. In particular, it was found that the moisture-permeable waterproof fabric also has excellent adhesiveness to the water repellent cloth and the super water repellent cloth.

On the other hand, Comparative Example 1 is an aspect in which the castor oil polyol was used instead of the polyester polyol (a2) for the surface skin layer (iii), and a result was that the film strength was bad and the moisture permeability was low.

Comparative Example 2 is an aspect in which the biomass raw material was not used in the adhesive layer (ii), and the adhesiveness to the water repellent cloth and the super water repellent cloth was bad.

Comparative Example 3 is an aspect in which materials other than a resin composition specified in the invention were used in both the adhesive layer (ii) and the surface skin layer (iii), and the adhesiveness, the film strength, and the moisture permeability were bad.

**Claims**

1. A moisture-permeable waterproof fabric, comprising:

   a cloth (i);
   an adhesive layer (ii); and
   a surface skin layer (iii), wherein
   the adhesive layer (ii) is formed from a moisture-curable polyurethane hot melt resin composition that contains a urethane prepolymer (C) having an isocyanate group, and the urethane prepolymer (C) is a reaction product of a polyisocyanate (B) and a polyol (A) containing a polyester polyol (a1) containing, as raw materials thereof, a biomass-derived polybasic acid (x) and a biomass-derived glycol (y), and
   the surface skin layer (iii) is formed from a urethane resin composition that contains a urethane resin (R) containing a polyol (P) and a polyisocyanate (Q) as essential raw materials thereof, and the polyol (P) contains a polyol (P1) having an oxyethylene group and a polyester polyol (P2) containing, as raw materials thereof, a biomass-derived glycol (z) and a crystalline polybasic acid (w).

2. The moisture-permeable waterproof fabric according to claim 1, wherein
   the biomass-derived glycol (y) and the biomass-derived glycol (z) are 1,3-propanediol and/or 1,4-butanediol.

3. The moisture-permeable waterproof fabric according to claim 1 or 2, wherein
   the biomass-derived polybasic acid (x) is sebacic acid and/or succinic acid.

4. The moisture-permeable waterproof fabric according to any one of claims 1 to 3, wherein
   the crystalline polybasic acid (w) is derived from biomass.

5. The moisture-permeable waterproof fabric according to claim 4, wherein
   the biomass-derived crystalline polybasic acid is one or more compounds selected from a group consisting of sebacic acid, succinic acid, 1,10-decanedicarboxylic acid, and 1,12-dodecanedicarboxylic acid.

6. The moisture-permeable waterproof fabric according to any one of claims 1 to 5, wherein the polyol (P) has a hydroxyl equivalent of 400 g/eq. to 600 g/eq..

7. The moisture-permeable waterproof fabric according to any one of claims 1 to 6, wherein the adhesive layer (ii) has a biomass degree of 40% or more.

8. The moisture-permeable waterproof fabric according to any one of claims 1 to 7, wherein the surface skin layer (iii) has a biomass degree of 50% or more.

9. The moisture-permeable waterproof fabric according to any one of claims 1 to 8, wherein the cloth (i) is a water-repellent cloth.

## INTERNATIONAL SEARCH REPORT

| | International application No. |
|---|---|
| | PCT/JP2020/033357 |

### A. CLASSIFICATION OF SUBJECT MATTER

B32B 27/00(2006.01)i; B32B 27/12(2006.01)i; B32B 27/40(2006.01)i; C09J
175/06(2006.01)i; C08G 18/42(2006.01)i; C09J 7/:35(2018.01)i
FI:       B32B27/40; B32B27/00 D; B32B27/12; C09J7/35; C09J175/06;
          C08G18/42 044

According to International Patent Classification (IPC) or to both national classification and IPC

### B. FIELDS SEARCHED

Minimum documentation searched (classification system followed by classification symbols)
B32B 27/00; B32B 27/12; B32B 27/40; C09J175/06; C08G18/42; C09J7/35

| Documentation searched other than minimum documentation to the extent that such documents are included in the fields searched |  |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2018-65940 A (SANYO CHEMICAL INDUSTRIES, LTD.) 26 April 2018 (2018-04-26) claims | 1-9 |
| A | WO 2008/090877 A1 (KOMATSU SEIREN CO., LTD.) 31 July 2008 (2008-07-31) example 3 | 1-9 |
| A | JP 2012-224951 A (TORAY INDUSTRIES, INC.) 15 November 2012 (2012-11-15) claims | 1-9 |
| A | WO 2011/105595 A1 (SEIREN CO., LTD.) 01 September 2011 (2011-09-01) claims | 1-9 |
| A | JP 2009-161898 A (TORAY COATEX CO., LTD.) 23 July 2009 (2009-07-23) claims | 1-9 |
| A | WO 2009/044875 A1 (TORAY INDUSTRIES, INC.) 09 April 2009 (2009-04-09) claims | 1-9 |
| A | KR 10-2019-0095683 A (BSG CO., LTD.) 16 August 2019 (2019-08-16) claims | 1-9 |

☐ Further documents are listed in the continuation of Box C.      ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 21 October 2020 (21.10.2020) | 02 November 2020 (02.11.2020) |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

INTERNATIONAL SEARCH REPORT
Information on patent family members

International application No.

PCT/JP2020/033357

| Patent Documents referred in the Report | Publication Date | Patent Family | Publication Date |
|---|---|---|---|
| JP 2018-65940 A | 26 Apr. 2018 | (Family: none) | |
| WO 2008/090877 A1 | 31 Jul. 2008 | CN 101588924 A example 3 | |
| JP 2012-224951 A | 15 Nov. 2012 | (Family: none) | |
| WO 2011/105595 A1 | 01 Sep. 2011 | US 2012/0322328 A1 claims EP 2540908 A1 CN 102762792 A | |
| JP 2009-161898 A | 23 Jul. 2009 | (Family: none) | |
| WO 2009/044875 A1 | 09 Apr. 2009 | US 2010/0221966 A1 claims EP 2202352 A1 KR 10-2010-0065173 A CN 101809224 A ES 2601515 T JP 2015-14079 A | |
| KR 10-2019-0095683 A | 16 Aug. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017202608 A

- JP 2018065940 A